# EUROPÄISCHE PATENTSCHRIFT

(11) **EP 3 338 525 B1**
(45) Veröffentlichungstag und Bekanntmachung des Hinweises auf die Patenterteilung: **06.05.2020**
(21) Anmeldenummer: 17208354.5
(22) Anmeldetag: 19.12.2017
(51) Int. Cl.: A01C 23/00, A01K 1/01

(54) **SAMMELVORRICHTUNG FÜR EINEN FASSWAGEN**
COLLECTING DEVICE FOR A BARREL CARRIAGE
DISPOSITIF COLLECTEUR POUR UN WAGON-FOUDRE

(30) Priorität: 23.12.2016 DE 202016107334 U
(43) Veröffentlichungstag der Anmeldung: 27.06.2018
(73) Patentinhaber: Fliegl Agrartechnik GmbH, 84453 Mühldorf am Inn (DE)
(72) Erfinder: Fliegl, Josef, jun., 84453 Mühldorf am Inn (DE)
(74) Vertreter: Nußbaum, Christopher

(56) Entgegenhaltungen:
- US-A1- 2009 293 911
- US-A1- 2010 147 331
- US-A1- 2012 159 735

## Beschreibung

Die Erfindung betrifft eine Sammelvorrichtung für einen Fasswagen der im Oberbegriff des Anspruchs 1 angegebenen Art. Des Weiteren betrifft die Erfindung einen Fasswagen mit einer derartigen Sammelvorrichtung.

Die US 8 997 307 B2 zeigt eine Sammelvorrichtung für einen Fasswagen, welche ein sich entlang der Längsrichtung der Sammelvorrichtung verjüngendes Schiebeschild zum Aufstauen von auf einem Untergrund angeordneter Gülle aufweist. Des Weiteren umfasst die Sammelvorrichtung einen Saugeinlass zum Aufsaugen der mittels des Schiebeschilds aufgestauten Gülle. Ferner weist die Sammelvorrichtung noch eine Schnittstelle auf, mittels welcher der Saugeinlass zumindest mittelbar mit einem Fass des Fasswagens verbindbar ist.

Derartige Sammelvorrichtungen können beispielsweise an einem Fasswagen angebracht werden, welche in der Landwirtschaft zum Ausbringen von Gülle oder auch Jauche auf Feldern oder Grünland eingesetzt werden. Solche Fasswagen verfügen über ein Fass zum Aufnehmen von Gülle oder Jauche. Ferner kann bei einem derartigen Fasswagen eine Pumpvorrichtung vorgesehen sein, welche beispielsweise über eine Zapfwelle eines Zug- oder auch Trägerfahrzeugs angetrieben werden kann. Bei als Anhänger ausgeführten Güllefässern bzw. Fasswagen besteht auch die Möglichkeit, über die sogenannte Wegezapfwelle des Traktors die als Triebachse dienende Anhängerachse anzutreiben.

Beim Einsatz der eingangs beschriebenen Sammelvorrichtung, also bei bestimmungsgemäßer Einbaulage der Sammelvorrichtung an einem entsprechend dafür geeigneten Fasswagen und Verwendung der Sammelvorrichtung zum Sammeln und Aufsaugen von Gülle, besteht eine wesentliche Herausforderung darin, mittels des Saugeinlasses der Sammelvorrichtung zuverlässig die mittels des Schiebeschilds aufgestaute Gülle aufsaugen und andererseits die Sammelvorrichtung bei Nichtgebrauch besonders platzsparend und zuverlässig am Fasswagen zu verstauen.

Die US 2012/0159735 A1 beschreibt eine Vorrichtung zum Aufsammeln von Material, insbesondere von Flüssigkeiten. Die Vorrichtung umfasst einen Saugeinlass, welcher gegenüber einem Schiebeschild höhenverstellbar ausgebildet ist. Je nachdem, wie viel Material aufzusammeln ist oder um was für einen Untergrund es sich gerade handelt, kann der Saugeinlass in der Höhe variiert werden, um ein besonders gutes Ergebnis im Hinblick auf das Aufsammeln von Material zu erzielen. Der Saugeinlass umfasst zudem ein Ventil, dass mittels eines hydraulisch betriebenen Aktors betätigt werden kann.

Die US 2010/0147331 A1 einen als Anhänger ausgebildeten Tankwagen mit einem Schiebeschild, mittels dessen Flüssigkeiten aufgestaut und zusammengeschoben werden können. In dem Schiebeschild münden mehrere Schläuche, mittels dessen die aufgestaute Flüssigkeit aufgesaugt und einem Fass zugeführt werden kann. In das Schiebeschild hineinragende Bereiche der Schläuche können höhenverstellt werden. Zudem können die in das Schiebeschild hineinragende Bereiche abgeschraubt und durch andere Varianten derartiger Bereiche ersetzt werden. Dadurch ergibt sich ebenfalls eine Höhenverstellbarkeit der Bereiche.

Die US 2009/0293911 A1 zeigt einen Fasswagen mit einer Vorrichtung zum Aufsammeln von Flüssigkeiten. Die Vorrichtung umfasst ein Schiebeschild sowie einen höhenverstellbaren Saugeinlass zum Aufsaugen der Flüssigkeit. Der Saugeinlass ist mit einer vertikalen Stange verbunden, die in einer Bohrung höhenverstellbare geführt ist.

Es ist daher die Aufgabe der vorliegenden Erfindung, eine Sammelvorrichtung für einen Fasswagen bereitzustellen, mittels welcher diese genannten Herausforderungen auf besonders einfache Weise gelöst werden.

Diese Aufgabe wird durch eine Sammelvorrichtung für einen Fasswagen mit den Merkmalen des unabhängigen Anspruchs gelöst. Vorteilhafte Ausgestaltungen mit zweckmäßigen und nicht trivialen Weiterbildungen der Erfindung sind in den abhängigen Ansprüchen angegeben.

Die erfindungsgemäße Sammelvorrichtung für einen Fasswagen umfasst ein sich entlang der Längsrichtung der Sammelvorrichtung verjüngendes Schiebeschild zum Aufstauen von auf einem Untergrund angeordneter Gülle. Des Weiteren weist die erfindungsgemäße Sammelvorrichtung einen Saugeinlass zum Aufsaugen der mittels des Schiebeschilds aufgestauten Gülle sowie eine Schnittstelle auf, mittels welcher der Saugeinlass zumindest mittelbar mit einem Fass des Fasswagens verbindbar ist. Die erfindungsgemäße Sammelvorrichtung zeichnet sich dadurch aus, dass die Sammelvorrichtung eine Höhenverstelleinrichtung umfasst, mittels welcher eine Höhenposition des Saugeinlasses relativ zum Schiebeschild verstellbar ist.

Der Saugeinlass ist vorzugsweise dort angeordnet, wo das Schiebeschild bezogen auf die Querrichtung der Sammelvorrichtung am schmalsten ist. Dies bringt den Vorteil mit sich, dass die Gülle an dieser Stelle des Schiebeschildes bzw. im Bereich der engsten Stelle des Schiebeschildes üblicherweise am höchsten aufgestaut wird, wenn das Schiebeschild mittels des Fasswagens über den Untergrund bewegt wird. Der Saugeinlass kann beispielsweise ein Rohr sein, welches über die Schnittstelle zumindest mittelbar mit einer Öffnung des Fasses des Fasswagens verbindbar ist. Bei der Schnittstelle kann es sich beispielsweise um eine Flanschverbindung handeln, an welcher der Saugeinlass befestigt sein kann. Des Weiteren kann an einer derartigen Flanschverbindung zusätzlich beispielsweise noch ein Rohr oder auch ein Schlauch angebracht sein, welcher als Verbindungselement zwischen dem Saugeinlass und einer fassseitigen Schnittstelle, beispielsweise ebenfalls in Form einer Flanschverbindung oder dergleichen, dienen kann. Ferner kann die Sammelvorrichtung selbst oder der Fasswagen eine Pumpe aufweisen, mittels welcher zum Aufsaugen der aufgestauten Gülle ein Unterdruck erzeugt werden kann, in Folge dessen mittels des Saugeinlasses die mittels des Schiebeschilds aufgestaute Gülle in das Fass befördert bzw. gesaugt werden kann.

Ein wesentlicher Aspekt der Erfindung betrifft dabei die relative Höhenverstellbarkeit des Saugeinlasses zum Schiebeschild. Der Erfindung liegt dabei die Erkenntnis zugrunde, dass je nachdem, wie schnell das Schiebeschild über einen bestimmten Untergrund befördert wird, sich die Gülle unterschiedlich hoch im Bereich des Schiebeschilds aufstauen wird. Ferner kann die Aufstauhöhe der Gülle im Bereich des Schiebeschilds auch von der Viskosität der Gülle abhängen. Um die auf dem Untergrund befindliche Gülle besonders gut aufzusammeln und vor allem auch im Bereich des Schiebeschilds aufzustauen, wird es an sich zweckmäßig sein, das Schiebeschild besonders nah am Untergrund oder auf dem Untergrund aufliegend über diesen zu befördern. Je nachdem, wie hoch die Gülle mittels des Schiebeschilds aufgestaut werden kann, wird üblicherweise der Abstand zwischen der im Bereich des Schiebeschilds aufgestauten Gülle und dem Saugeinlass unterschiedlich groß sein. Genau diesen Umstand adressiert die erfindungsgemäße Sammelvorrichtung, indem die Höhenposition des Saugeinlasses relativ zum Schiebeschild verstellbar ausgebildet ist.

Mittels der erfindungsgemäßen Sammelvorrichtung ist es unabhängig von der Positionierung des Schiebeschilds möglich, den Saugeinlass relativ zum Schiebeschild in Hochrichtung zu verstellen, sodass der Abstand zwischen dem Untergrund und der Saugeinrichtung und der Abstand zwischen dem Untergrund und dem Schiebeschild zumindest in gewissen Grenzen unabhängig voneinander eingestellt werden kann. Beispielsweise kann das Schiebeschild soweit abgelassen werden, dass es auf dem Untergrund aufliegt. Je nachdem, wie hoch die Gülle mittels des Schiebeschilds aufgestaut wird, also je nachdem, wie weit die Oberfläche der aufgestauten Gülle von dem Saugeinlass entfernt ist, kann der Saugeinlass relativ zur Oberfläche der aufgestauten Gülle höhenverstellt werden, und zwar unabhängig von der Höheneinstellung des Schiebeschilds selbst. Dadurch kann der Saugeinlass in Hochrichtung der Sammelvorrichtung und somit auch in Hochrichtung des betreffenden Fasswagens, sofern die Sammelvorrichtung am Fasswagen montiert ist, möglichst optimal eingestellt werden, sodass die mittels des Schiebeschilds zusammengetragene und aufgestaute Gülle besonders gut aufgesaugt werden kann.

Eine vorteilhafte Ausführungsform der Erfindung sieht vor, dass die Höhenverstelleinrichtung dazu ausgelegt ist, in Abhängigkeit von einem Unterdruck in dem als Vakuumfass ausgebildeten Fass des Fasswagens die Höhenposition des Saugeinlasses relativ zum Schiebeschild automatisch zu verstellen. Vorzugsweise umfasst die Sammelvorrichtung einen Sensor, insbesondere im Bereich der Schnittstelle, welcher dazu ausgelegt ist, den Unterdruck im Vakuumfass zu messen und entsprechende Messdaten an die Höhenverstelleinrichtung zu übertragen. Im Falle eines Vakuumfasses wird durch eine Vakuumpumpe, beispielweise in Form einer Drehschieberpumpe, das Vakuumfass des Fasswagens beim Befüllvorgang unter Vakuum, genau genommen eigentlich unter Unterdruck, gesetzt, wodurch die Gülle durch den Saugeinlass in das Vakuumfass gesaugt wird. Je nachdem, wie zähflüssig die aufzusaugende Gülle ist, können ganz unterschiedliche Unterdrücke erforderlich sein, um die Gülle zuverlässig und vor allem auch schnell in das Vakuumfass zu befördern. Dadurch, dass die Höhenverstelleinrichtung dazu ausgelegt ist, in Abhängigkeit vom Unterdruck im Vakuumfass die Höhenposition des Saugeinlasses relativ zum Schiebeschild automatisch zu verstellen, kann immer eine möglichst optimale Saugleistung sichergestellt werden. Beispielweise kann der im Vakuumfass erzielbare Unterdruck vom aktuellen Befüllgrad des Vakuumfasses abhängen. Des Weiteren kann der herstellbare Unterdruck im Vakuumfass natürlich auch von der eingesetzten Vakuumpumpe abhängen. Grundsätzlich ist es möglich, dass der Unterdruck im Vakuumfass während des Befüllvorgangs Schwankungen unterliegen kann. Mittels der Höhenverstelleinrichtung ist es dabei möglich, den Saugeinlass bei Bedarf abzulassen oder anzuheben, je nachdem, wie groß der aktuell gemessene Unterdruck im Vakuumfass ist. Als Regelgröße kann beispielsweise ein bestimmter Volumenstrom durch den Saugeinlass vorgegeben werden, wobei zur Erzielung dieser vorgegebenen Regelgröße und in Abhängigkeit vom gemessenen Unterdruck im Vakuumfass die Höhenposition des Saugeinlasses relativ zum Schiebeschild automatisch reguliert werden kann. Ferner ist es alternativ oder zusätzlich auch denkbar, dass über eine entsprechend geeignete Messeinrichtung der Sammelvorrichtung die Viskosität der Gülle bestimmt wird, wobei in Abhängigkeit von der gemessenen Viskosität der Gülle ebenfalls die Höhenposition des Saugeinlasses relativ zum Schiebeschild automatisch verstellt werden kann. Dadurch kann der Durchfluss durch den Saugeinlass, und somit auch die Befüllung des Fasses des betreffenden Fasswagens, optimiert werden.

Gemäß einer weiteren vorteilhaften Ausführungsform der Erfindung ist es vorgesehen, dass die Höhenverstelleinrichtung dazu ausgelegt ist, in Abhängigkeit von einem Güllestand der mittels des Schiebeschilds aufgestauten Gülle und/oder in Abhängigkeit von einem Abstand zwischen der Oberfläche der mittels des Schiebeschilds aufgestauten Gülle und dem Saugeinlass die Höhenposition des Saugeinlasses relativ zum Schiebeschild automatisch zu verstellen. Vorzugsweise weist die Sammeleinrichtung selbst dafür eine Messeinrichtung auf, welche dazu ausgelegt ist, den Güllestand und/oder den Abstand zwischen der Oberfläche der Gülle und dem Saugeinlass zu messen und entsprechende Messdaten an die Höhenverstelleinrichtung zu übertragen. Wie vorstehend bereits schon erwähnt, sind der Güllestand bzw. der Abstand zwischen der Oberfläche der mittels des Schiebeschilds aufgestauten Gülle und dem Saugeinlass wesentliche Parameter, welche den Volumenstrom der Gülle durch den Saugeinlass beeinflussen. Je höher der aufgestaute Güllestand im Bereich des Schiebeschilds ist, desto weiter kann der Saugeinlass relativ zum Schiebeschild angehoben werden. Des Weiteren kann die Höhenposition des Saugeinlasses relativ zum Schiebschild so eingestellt werden, dass der Abstand zwischen der Oberfläche der aufgestauten Gülle und dem Saugeinlass minimiert wird oder, sofern der Güllestand hoch genug sein sollte, der Saugeinlass auch in die aufgestaute Gülle eingetaucht wird. Dadurch, dass der Güllestand und/oder der Abstand zwischen der Oberfläche der Gülle und dem Saugeinlass erfasst und bei der Ansteuerung der Höhenverstelleinrichtung berücksichtigt werden kann, kann der Durchfluss durch die Saugeinrichtung optimiert werden.

Die Erfindung sieht zudem vor, dass am Saugeinlass eine Schwinge befestigt ist, welche um eine in Querrichtung der Sammelvorrichtung verlaufende Achse verschwenkbar am Schiebeschild angeordnet ist, wobei die Höhenverstelleinrichtung einen Hydraulikzylinder aufweist, mittels welchem die Schwinge gegenüber dem Schiebeschild um die Achse verschwenkbar ist. Dadurch wird eine besonders einfache und robuste Verstellmöglichkeit zum Verändern der Höhenposition des Saugeinlasses relativ zum Schiebeschild bereitgestellt. Der besagte Hydraulikzylinder der Höhenverstelleinrichtung stützt sich dabei vorzugsweise an einem hinteren Ende des Schiebeschilds ab und kann die Schwinge, welche am Saugeinlass befestigt ist, in Hochrichtung der Sammelvorrichtung vom Schiebeschild wegdrücken oder an dieses heranziehen, je nachdem, ob der Saugeinlass weiter nach oben oder nach unten verstellt werden soll.

Gemäß einer weiteren vorteilhaften Ausführungsform der Erfindung ist es vorgesehen, dass das Schiebeschild in der bestimmungsgemäßen Einbaulage der Sammelvorrichtung zur Höhenverstellung des Schiebeschilds zwischen einer abgesenkten Arbeitsstellung und einer angehobenen Transportstellung relativ zum Fasswagen bewegbar ist. Sollte die Sammelvorrichtung in ihrer montierten Lage am Fasswagen beispielsweise gerade nicht benötigt werden, kann das Schiebeschild in die angehobene Transportstellung bewegt werden, in welcher das Schiebeschild sich nicht in Kontakt mit dem gerade mit dem Fasswagen befahrenen Untergrund befindet. Dadurch kann ein unnötiger Verschleiß am Schiebeschild verhindert werden. Sobald mittels der Sammelvorrichtung auf dem Untergrund befindliche Gülle aufgesammelt und aufgestaut werden soll, ist es hingegen möglich, das Schiebeschild in die abgesenkte Arbeitsstellung zu verbringen.

Eine weitere vorteilhafte Ausführungsform der Erfindung sieht vor, dass die Sammelvorrichtung zur Höhenverstellung des Schiebeschilds wenigstens einen Hydraulikzylinder und ein Zugmittel umfasst, wobei in der bestimmungsgemäßen Einbaulage der Sammelvorrichtung der Hydraulikzylinder am Fasswagen angeordnet und unter Vermittlung des Zugmittels zumindest mittelbar mit dem Schiebeschild verbunden ist. Bei dem Zugmittel kann es sich beispielsweise um einen Riemen oder auch um eine Kette handeln. In beiden Fällen besteht der Vorteil darin, dass keine Druckkräfte über das Zugmittel an den Hydraulikzylinder übertragen werden. Dadurch wird der Hydraulikzylinder nur auf Zug und nicht auf Druck belastet. Sollte also beispielsweise aufgrund einer Bodenunebenheit das Schiebeschild nach oben bewegt werden, so wirkt sich das nicht auf den Hydraulikzylinder aus, da das Zugmittel keine Druckkräfte auf den Hydraulikzylinder übertragen kann. Selbst wenn also das Schiebeschild aufgrund einer Bodenunebenheit nach oben geschlagen bzw. plötzlich nach oben bewegt werden sollte, trägt der Hydraulikzylinder keinen Schaden davon. Anstelle des Hydraulikzylinders kann beispielsweise auch ein Pneumatikzylinder oder ein Stellmotor vorgesehen werden.

In weiterer vorteilhafter Ausgestaltung der Erfindung ist es vorgesehen, dass in der bestimmungsgemäßen Einbaulage der Sammelvorrichtung der Hydraulikzylinder mit der Fahrzeuglängsrichtung des Fasswagens fluchtend angeordnet ist, wobei das Zugmittel mittels einer am Fasswagen angeordneten Umlenkrolle der Sammelvorrichtung um im Wesentlichen 90 Grad umgelenkt ist. Der Vorteil bei dieser bevorzugten Ausführungsform der Erfindung besteht darin, dass der Hydraulikzylinder auch mit einem sehr großen Hub ausgestattet werden kann, wobei dieser dabei dennoch besonders platzsparend am Fasswagen angebracht werden kann, da in der bestimmungsgemäßen Einbaulage der Sammelvorrichtung der Hydraulikzylinder mit der Fahrzeuglängsrichtung des Fasswagens fluchtet. Durch die Umlenkrolle kann das Zugmittel um im Wesentlichen 90 Grad umgelenkt werden, sodass durch eine Hubbewegung des Hydraulikzylinders in Fahrzeuglängsrichtung ein Anheben und Absenken des Schiebeschilds in Fahrzeughochrichtung des Fasswagens auf besonders einfache Weise ermöglicht wird. Je nach Einbausituation am Fasswagen ist es aber ebenfalls möglich, den Hydraulikzylinder auch nicht mit der Fahrzeuglängsrichtung des Fasswagens fluchtend sondern ganz anders ausgerichtet anzuordnen.

Gemäß einer weiteren vorteilhaften Ausführungsform der Erfindung weist das Schiebeschild in der bestimmungsgemäßen Einbaulage der Sammelvorrichtung in Fahrzeugquerrichtung des Fasswagens einen Bewegungsfreiheitsgrad auf. Das Schiebeschild kann dadurch während der Verwendung nach links und rechts relativ zum Fasswagen verschoben werden. Das Schiebeschild ist also - zumindest in gewissen Grenzen - freischwingend am Fasswagen anbringbar.

Eine weitere vorteilhafte Ausführungsform der Erfindung sieht vor, dass die Sammelvorrichtung zumindest ein am Schiebeschild befestigtes Zugmittel aufweist, welches am Fasswagen befestigbar ist, um das Schiebeschild mittels des Fasswagens zu ziehen. Bei dem Zugmittel kann es sich zum Beispiel um ein Drahtseil handeln. Vorzugsweise ist das Zugmittel so lang und derart am Fasswagen befestigbar, dass beim Anheben und Absenken des Schiebeschilds diese nur an dem Zugmittel hängt, welches zum Anheben und Absenken des Schiebeschilds dient.

In weiterer vorteilhafter Ausgestaltung der Erfindung ist es vorgesehen, dass am Schiebeschild zumindest ein Stützelement angeordnet ist, mittels welchem das Schiebeschild in der angehobenen Transportstellung von unten am Fasswagen abstützbar ist. Das Stützelement kann auch als eine Art Anschlag verstanden werden, sodass das Schiebeschild in der angehobenen Transportstellung unter Vermittlung des Stützelements unterseitig am Fasswagen anschlägt. Dadurch kann eine aufwendige Positionsregelung bzw. Positionssteuerung zur Anordnung des Schiebeschilds in der angehobenen Transportstellung entfallen. Beispielsweise ist es möglich, dass das Schiebeschild rein kraftgesteuert in die angehobene Transportstellung verbracht wird, wobei automatisch, sobald das Stützelement sich am Fasswagen abstützt, ein bestimmter Kraftschwellenwert zwangsläufig irgendwann erreicht wird, da das Schiebeschild ja nicht weiter angehoben werden kann. Dies erleichtert erheblich die Verstellbewegung des Schiebeschilds in die Transportstellung, da keine aufwendigen Regelungen bzw. Steuerungen erforderlich sind.

Eine weitere vorteilhafte Ausführungsform der Erfindung sieht vor, dass das Schiebeschild einen linken und einen rechten Arm aufweist, welche zur Breitenverstellung des Schiebeschilds zwischen einer ausgebreiteten Arbeitsstellung und einer zusammengeklappten Transportstellung verschwenkbar an einem restlichen, insbesondere im Wesentlichen V-förmigen, Teil des Schiebeschilds gelagert sind. Die nach außen und nach innen verschwenkbaren Arme des Schiebeschilds bilden dabei eine Vorderseite des Schiebeschilds aus, wobei der restliche Teil des Schiebeschilds ein Hinterteil des Schiebeschilds bezogen auf die bestimmungsgemäße Vorwärtsfahrtrichtung des Schiebeschilds ausbildet. Mit anderen Worten verläuft das Schiebeschild in Vorwärtsfahrtrichtung in der bestimmungsgemäßen Einbaulage von vorne nach hinten konisch zulaufend. Dadurch, dass der linke und der rechte Arm zwischen der ausgebreiteten Arbeitsstellung und der zusammengeklappten Transportstellung verschwenkbar sind, kann bei Bedarf eine besonders große Arbeitsbreite des Schiebeschilds eingestellt werden, wobei bei Nichtgebrauch das Schiebeschild besonders platzsparend zusammengeklappt werden kann. Insbesondere können der linke und der rechte Arm soweit zusammengeklappt werden, dass die beiden Arme nicht über den betreffenden Fasswagen in Fahrzeugquerrichtung überstehen.

Vorzugsweise weist die Sammelvorrichtung zur Breitenverstellung des Schiebeschilds jeweilige Hydraulikzylinder auf, mittels welchen der linke Arm und der rechte Arm zumindest mittelbar mit dem restlichen Teil des Schiebeschilds verbunden sind. Dabei kann es auch vorgesehen sein, dass sowohl die Breitenverstellung des Schiebeschilds als auch die Höhenverstellung des Schiebeschilds derart miteinander gekoppelt sind, dass bezogen auf die Höhenverstellung als auch auf die Breitenverstellung des Schiebeschilds automatisch die besagten Arbeitsstellungen und Transportstellungen eingenommen werden können. Ein Bediener der Sammelvorrichtung muss dafür beispielsweise nur ein einziges Bedienelement, wie beispielsweise einen Schalter oder dergleichen, betätigen, um das Schiebeschild sowohl in der Höhe als auch in der Breite in die Arbeitsstellung bzw. in die Transportstellung zu verbringen.

Der erfindungsgemäße Fasswagen umfasst die erfindungsgemäße Sammelvorrichtung oder eine vorteilhafte Ausführungsform der erfindungsgemäßen Sammelvorrichtung.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Seitenansicht eines Fasswagens, welcher ein Güllefass aufweist, wobei unterseitig am Fasswagen eine Sammelvorrichtung mit einem Schiebeschild zum Aufstauen von auf einem Untergrund angeordneter Gülle angebracht ist, wobei das Schiebeschild in einer angehobenen Transportstellung angeordnet ist;
- Fig. 2: eine Draufsicht auf den Fasswagen, wobei das Schiebeschild ebenfalls in der angehobenen Transportstellung angeordnet ist und jeweilige verschwenkbare Arme des Schiebeschilds in einer seitlich angeklappten Transportstellung angeordnet sind;
- Fig. 3: eine Frontalansicht auf den Fasswagen, wobei wiederum das Schiebeschild in der angehobenen und angeklappten Transportstellung dargestellt ist;
- Fig. 4: eine seitliche Detailansicht der am Fasswagen angebrachten Sammelvorrichtung, wobei das Schiebeschild auch wieder in der angehobenen und angeklappten Transportstellung dargestellt ist;
- Fig. 5: eine teiltransparente Seitenansicht der Sammelvorrichtung ohne Fasswagen, wobei ein hinterer Bereich hervorgehoben ist, in welchem sich ein Saugeinlass zum Aufsaugen von mittels des Schiebeschilds aufgestauter Gülle befindet;
- Fig. 6: eine vergrößerte Darstellung des in Fig. 5 gekennzeichneten Bereichs A, wobei ein Hydraulikzylinder einer Höhenverstelleinrichtung zu erkennen ist, mittels welchem eine Höhenposition des Saugeinlasses relativ zum Schiebeschild verstellbar ist;
- Fig. 7: eine Draufsicht der Sammelvorrichtung, wobei die beiden verschwenkbaren Arme des Schiebeschilds sowohl in ihrer nach innen eingeklappten Transportstellung als auch in einer nach außen geschwenkten Arbeitsstellung angeordnet sind;
- Fig. 8: eine weitere Seitenansicht des Fasswagens mit der daran angebrachten Sammelvorrichtung, wobei das Schiebeschild einer herabgelassenen Arbeitsstellung angeordnet ist;
- Fig. 9: eine weitere Draufsicht auf den Fasswagen mit der daran angebrachten Sammelvorrichtung, wobei die beiden Arme des Schiebeschilds in ihrer nach außen ausgebreiteten Arbeitsstellung angeordnet sind;
- Fig. 10: eine weitere Frontalansicht des Fasswagens mit der daran angebrachten Sammelvorrichtung, wobei das Schiebeschild in der abgesenkten und ausgeklappten Arbeitsstellung dargestellt ist; und in
- Fig. 11: eine weitere Detailansicht der am Fasswagen angebrachten Sammelvorrichtung, wobei diese wiederum in ihrer abgesenkten Arbeitsstellung dargestellt ist.

In den Figuren werden gleiche oder funktionsgleiche Elemente mit den gleichen Bezugszeichen versehen.

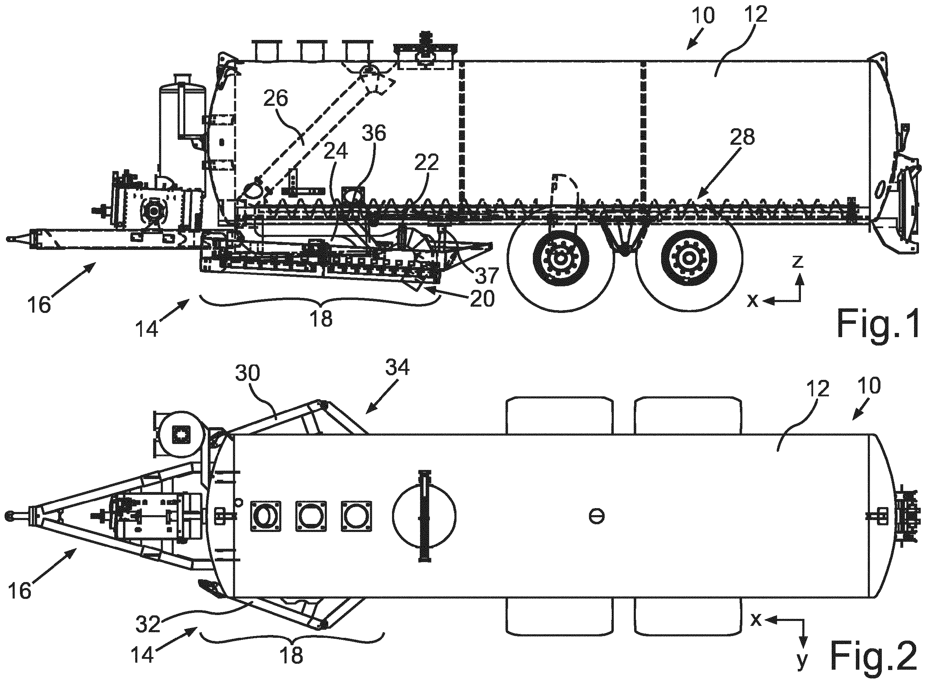

Ein Fasswagen 10 mit einem als Güllefass dienen Fass 12 ist in einer Seitenansicht in Fig. 1 gezeigt. Unterhalb vom Fasswagen 10 ist eine Sammelvorrichtung 14 angebracht, welche zum Aufsammeln, Aufstauen und Aufsaugen von Gülle dient. Die Sammelvorrichtung 14 ist hinter einer Deichsel 16 und unterhalb von dem Fass 12 angebracht. Die Sammelvorrichtung 14 umfasst ein sich entlang der Längsrichtung x der Sammelvorrichtung 14 verjüngendes Schiebeschild 18 zum Aufstauen von auf einem nicht näher bezeichneten Untergrund angeordneter Gülle. In der vorliegenden Darstellung ist das Schiebeschild 18 in seiner angehobenen Transportstellung angeordnet, in welcher das Schiebeschild 18 den Untergrund nicht berührt.

Das Schiebeschild 18 kann an seiner Unterseite beispielsweise Kufen und/oder Rollen aufweisen, auf denen das Schiebeschild 18 auf dem Untergrund entlangleiten und/oder entlangrollen kann. Fernern können an der Unterseite des Schiebeschilds 18 alternativ oder zusätzlich auch Kunststoff- oder Gummiabstreifer angeordnet sein, mittels welchen die Gülle besonders gut vom Untergrund abgestreift werden kann.

In der hier gezeigten bestimmungsgemäßen Einbaulage der Sammelvorrichtung 14 entsprechen die Längsrichtung x, die Querrichtung y und die Hochrichtung z der Sammelvorrichtung der Längsrichtung x, der Querrichtung y und der Hochrichtung z des Fasswagens 12. Wenn also nachfolgend von der Längsrichtung x, der Querrichtung y oder der Hochrichtung z die Rede ist, sind diese Richtungsangaben synonym sowohl für den Fasswagen 12 als auch für die Sammelvorrichtung 14 zu verstehen.

Die Sammelvorrichtung 14 umfasst des Weiteren einen Saugeinlass 20 zum Aufsaugen der mittels des Schiebeschilds 18 aufgestauten Gülle. Der Saugeinlass 20 ist in Form eines im Wesentlich viertelkreisförmig gebogenen Rohrs ausgebildet. Des Weiteren weist die Sammelvorrichtung 14 noch eine Schnittstelle 22 auf, mittels welcher der Saugeinlass 20 mittelbar mit dem Fass 12 des Fasswagens 10 verbindbar ist. Über die Schnittstelle 22 ist der Saugeinlass 20 mit einem flexiblen Schlauch 24 verbunden, welcher wiederum mit einer nicht näher bezeichneten Öffnung des Fasses 12 verbunden ist. Innenseitig am Fass 12 ist noch ein schräg angestelltes Rohr 26 angeordnet, durch welches die mittels des Saugeinlasses 20 angesaugte Gülle ins Innere des Fasses 12 befördert wird.

Im Inneren des vorliegend teiltransparent dargestellten Fasses 12 ist noch ein Schneckenförderer 28 angeordnet, mittels welchem die am Fass 12 aufgenommene Gülle zu einem nicht näher bezeichneten Auslass des Fasses 12 befördert werden kann, wenn die Gülle aus dem Fass 12 hinaus befördert werden soll. Statt des Schneckenförderers 28 können aber auch andere Fördermittel im Inneren des Fasses 12 angeordnet sein, um die im Fass 12 aufgenommene Gülle hinaus zu befördern.

In Fig. 2 ist der Fasswagen 10 in einer Draufsicht gezeigt, wobei sich das Schiebeschild 18 nach wie vor in seiner angehobenen Transportstellung befindet. Das Schiebeschild 18 umfasst einen rechten Arm 30 und einen linken Arm 32, welche zur Breitenverstellung des gesamten Schiebeschilds 18 zwischen einer ausgebreiteten Arbeitsstellung und der hier dargestellten zusammengeklappten Transportstellung verschwenkbar an einem restlichen, im Wesentlichen V-förmigen, restlichen Teil 34 des Schiebeschilds 18 gelagert sind. Durch die verschwenkbaren Arme 30, 32 kann also die Breite des Schiebeschilds 34 bedarfsgerecht variiert werden. Befindet sich das Schiebeschild 18 in der angehobenen Transportstellung, so kann dieses auch in die hier gezeigte zusammengeklappte Transportstellung verbracht werden, sodass die beiden Arme 30, 32 möglichst wenig oder gar nicht seitlich über das Fass 12 bzw. den Fasswagen 10 hinausragen.

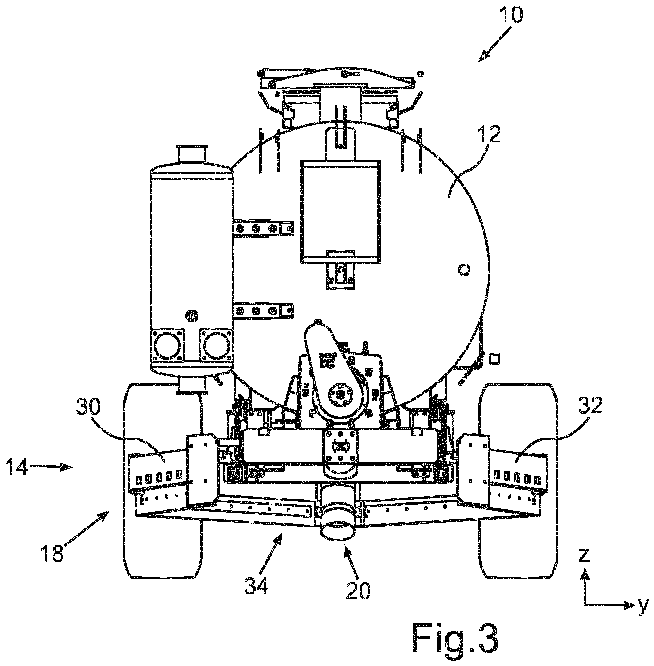

In Fig. 3 ist der Fasswagen 10 in einer Frontalansicht gezeigt, wobei das Schiebeschild 18 wiederum in seiner angehobenen und seitlich zusammengeklappten Transportstellung angeordnet ist. In der vorliegenden Darstellung ist nochmals gut zu erkennen, dass das Schiebeschild 18 soweit vom Untergrund beabstandet angeordnet ist, dass es diesen nicht berührt. Ferner ist in dieser Frontalansicht gut zu erkennen, dass aufgrund der eingeklappten Arme 30, 32 das Schiebeschild 18 auch seitlich nicht über den Fasswagen 10 hinausragt.

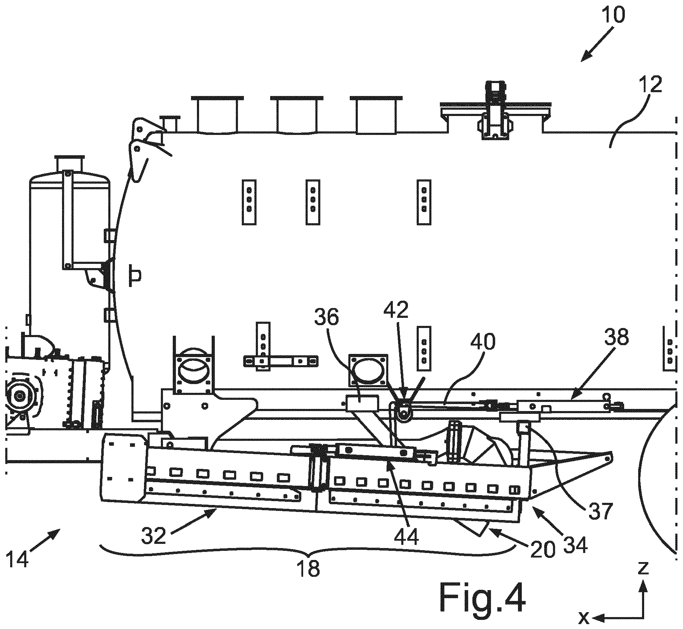

In Fig. 4 ist die am Fasswagen 10 angebrachte Sammelvorrichtung 14 in einer etwas vergrößerten seitlichen Detailansicht gezeigt, wobei sich das Schiebeschild 18 wiederum in seiner seitlich zusammengeklappten und nach oben bewegten Transportstellung befindet. In dieser oben angeordneten Transportstellung stützt sich das Schiebeschild 18 mit mehreren Stützelementen 36, 37 unterseitig am Fasswagen 10 ab.

Die Sammelvorrichtung 18 umfasst zur Höhenverstellung des Schiebeschilds 18 linksseitig und rechtsseitig am Fasswagen 10 angebrachte Hydraulikzylinder 38, welche mit der Fahrzeuglängsrichtung x des Fasswagens 10 fluchtend angeordnet sind. Zur Höhenverstellung des Schiebeschilds 18 umfasst die Sammelvorrichtung 14 des Weiteren jeweilige Zugmittel 40, welche an den jeweiligen Hydraulikzylindern 38 befestigt sind. Die linksseitig und rechtsseitig am Fasswagen 10 angebrachten Zugmittel 40 werden mittels jeweiliger Umlenkrollen 42 der Sammelvorrichtung 14 im Wesentlichen um 90 Grad umgelenkt. An ihren von den Hydraulikzylindern 38 abgewandten Längsenden sind die Zugmittel 40 zumindest mittelbar an dem Schiebeschild 18 befestigt. Durch Einfahren der Hydraulikzylinder 38 kann das Schiebeschild 18 in die hier gezeigte angehobene Transportstellung bewegt werden. Sobald die Stützelemente 36, 37 unterseitig in Kontakt mit dem Fasswagen 10 gelangen, ist die angehobene Transportstellung des Schiebeschilds 18 erreicht. Eine besonders aufwendige Positionssteuerung der Hydraulikzylinder 38 kann dadurch entfallen, stattdessen kann beispielsweise eine kraftgeregelte Abschaltung der Bewegung der Hydraulikzylinder 38 vorgesehen sein.

Zur Breitenverstellung des Schiebeschilds 18, also zum Wegschwenken und Heranschwenken der beiden Arme 30, 32 umfasst die Sammelvorrichtung 14 jeweilige Hydraulikzylinder 44, mittels welchen der linke Arm 32 und der hier nicht erkennbare rechte Arm 30 zumindest mittelbar mit dem restlichen Teil 34 des Schiebeschilds 18 verbunden sind. Durch Ein- und Ausfahren der Hydraulikzylinder 44 können die beiden Arme 30, 32 ausgebreitet und zusammengeklappt werden. Es ist möglich, dass die Hydraulikzylinder 38, 44 bezüglich ihrer Ansteuerung derart miteinander gekoppelt sind, dass ein Anheben des Schiebeschilds 18 in die hier gezeigte Transportstellung auch automatisch ein Zusammenklappen der beiden Arme 30, 32 des Schiebeschilds 18 bewirkt. Umgekehrt kann es genauso vorgesehen sein, dass die beiden Hydraulikzylinder 38, 44 derart miteinander steuerungstechnisch gekoppelt sind, dass ein Absenken des Schiebeschilds 18 ein Ausklappen der beiden Arme 30, 32 in ihre ausgebreitete Arbeitsstellung bewirkt. Genauso gut ist es aber auch möglich, dass die beiden Hydraulikzylinder 38, 44 völlig unabhängig voneinander angesteuert werden können.

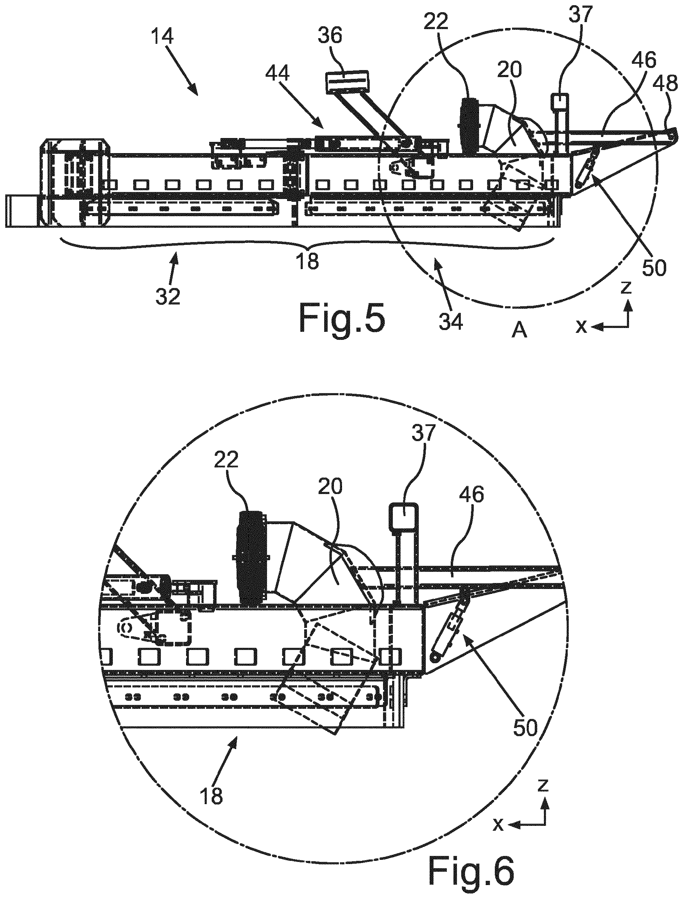

In Fig. 5 ist die Sammelvorrichtung 14 in einer teiltransparenten Seitenansicht alleine dargestellt, wobei die zur Höhenverstellung des Schiebeschilds 18 dienenden Hydraulikzylinder 38, Zugmittel 40 und Umlenkrollen 42 in der vorliegenden Darstellung nicht dargestellt sind. Neben der Möglichkeit, das Schiebeschild 18 relativ zum Fasswagen 10 höhenzuverstellen, bietet die Sammelvorrichtung 14 zusätzlich noch die Möglichkeit, den rohrartigen Saugeinlass 20 relativ zum Schiebeschild 18 in der Höhe, also in Hochrichtung z, zu verstellen.

Um diese relative Höhenverstellbarkeit des Saugeinlasses 20 gegenüber dem Schiebeschild 18 zu realisieren, ist rückseitig am Saugeinlass 20 eine Schwinge 46 befestigt, welche um eine in Querrichtung y der Sammelvorrichtung 14 verlaufende Achse 48 verschwenkbar am Schiebeschild 18 gelagert ist. Wie zu erkennen, befindet sich die Achse 48 an einem hinteren Ende des restlichen bzw. hinteren Teils 34 des Schiebeschilds 18. Die Schwinge 46 kann um die Achse 48 mittels eines Hydraulikzylinders 50 verschwenkt werden, welcher Teil einer nicht näher bezeichneten Höhenverstelleinrichtung für den Saugeinlass 20 ist.

Durch Ausfahren des Hydraulikzylinders 50 wird die Schwinge 46 gemäß der vorliegenden Darstellung im Uhrzeigersinn um die Achse 48 verschwenkt, infolgedessen der Saugeinlass 20 ebenfalls entsprechend verschwenkt wird. Dadurch verändert sich die relative Positionierung des Saugeinlasses 20 zum Schiebeschild 18, wobei unter anderem die Höhenposition des Saugeinlasses 20 relativ zum Schiebeschild 18 verändert wird. Durch Einfahren des Hydraulikzylinders 50 kann entsprechend umgekehrt die Schwinge 46 gegen den Uhrzeigersinn um die Achse 48 verschwenkt werden, infolgedessen der Saugeinlass 20 wieder bezogen auf die Hochrichtung z näher an das Schiebeschild 18 herangefahren bzw. heranbewegt wird.

Aufgrund der Verschwenkbewegung des Saugeinlasses 20 um die Achse 48 bei Betätigung des Hydraulikzylinders 50 verändert sich zwangsläufig auch die relative Positionierung des Saugeinlasses 20 bezogen auf die Längsrichtung x relativ zum Schiebeschild 18. Daher ist es vorteilhaft, dass an der Schnittstelle 20 der hier nicht dargestellte flexible Schlauch 24 angebracht ist, sodass über diesen ein gewisser Längen- und Höhenausgleich bei einer Verschiebung des Saugeinlasses 20 mitsamt der Schnittstelle 22 relativ zum Schiebeschild 18 und somit zwangsläufig auch relativ zum Fasswagen 10 realisiert werden kann.

In Fig. 6 ist der in Fig. 5 gekennzeichnete Bereich A in einer vergrößerten Detailansicht dargestellt. Hier ist nochmals gut die Schwinge 46 zu erkennen, welche rückseitig an dem Saugeinlass 20 befestigt und mittels des Hydraulikzylinders 50 verschwenkbar ist, infolgedessen die relative Positionierung des Saugeinlasses 20 zum Schiebeschild 18 bezogen auf die Längsrichtung x und auf die Hochrichtung z verändert werden kann. Je nachdem, wie hoch sich die Gülle im Bereich des Schiebeschilds 18 aufgestaut hat, kann die relative Höhenposition des Saugeinlasses 20 bedarfsgerecht gegenüber dem Schiebeschild 18 eingestellt werden, sodass jederzeit sichergestellt werden kann, dass über den Saugeinlass 20 die mittels des Schiebeschilds 18 in ihrem hinteren Bereich aufgestaute Gülle zuverlässig und möglichst effizient aufgesaugt werden kann.

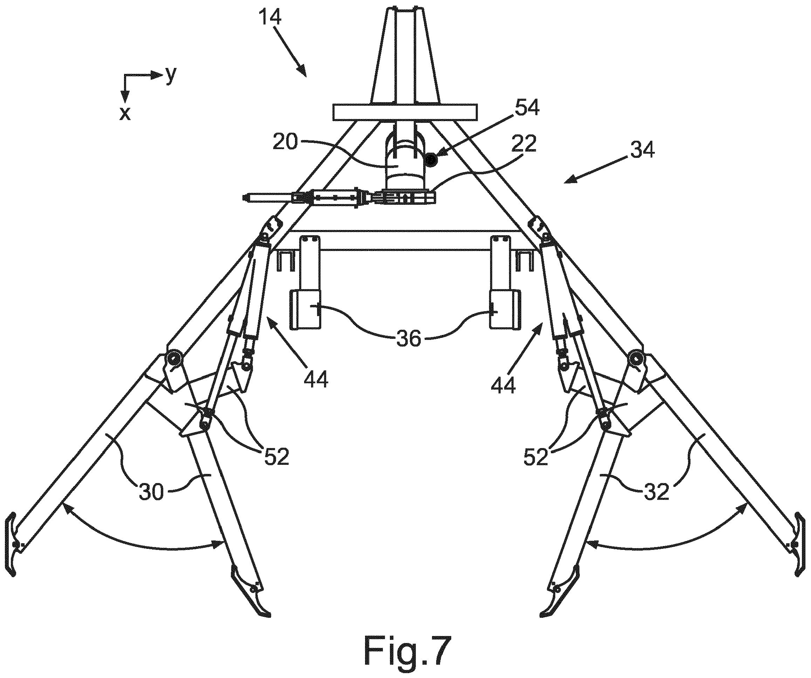

In Fig. 7 ist ein Teil der Sammelvorrichtung 14 in einer Draufsicht dargestellt. Die beiden Arme 30, 32 sind dabei sowohl in ihrer ausgebreiteten Arbeitsstellung als auch in ihrer zusammengeklappten Transportstellung dargestellt, weswegen die Arme 30, 32 sowie die für den Verstellvorgang erforderlichen Hydraulikzylinder 44 doppelt dargestellt sind. In der vorliegenden Darstellung ist zu erkennen, dass die Hydraulikzylinder 44 an jeweiligen im Wesentlichen rechtwinklig zu den beiden Armen 30, 32 angeordneten und an diesen befestigten Fortsätzen 52 angreifen. Dies erleichtert die Verschwenkung der beiden Arme 30, 32 mittels der Hydraulikzylinder 44, da auch bei vollständig ausgestreckten bzw. nach außen geklappten Armen 30, 32 die Hydraulikzylinder 44 immer noch einen Hebelarm aufgrund der rechtwinklig angeordneten Fortsätze 32 aufweisen.

Die nicht näher bezeichnete Höhenverstelleinrichtung, welche den Hydraulikzylinder 50 umfasst, um den Saugeinlass 20 relativ zum Schiebeschild 18 verstellen zu können, umfasst einen Sensor 54, welche hier nur schematisch angedeutet ist. Der Sensor 44 ist dazu ausgelegt, den Unterdruck im Fass 12 zu messen und entsprechende Messdaten an die Höhenverstelleinrichtung zu übertragen, welche zum relativen Verstellen der Saugeinrichtung 20 dient. Die Höhenverstelleinrichtung ist dazu ausgelegt, den Hydraulikzylinder 50 in Abhängigkeit von dem gemessenen Unterdruck im Fass 12 anzusteuern und dadurch die relative Höhenposition des Saugeinlasses 20 zum Schiebeschild 18 automatisch zu verstellen. Je niedriger der Unterdruck im Fass 12 ist, desto weiter wird der Saugeinlass 20 relativ zum Schiebeschild 18 abgesenkt und umgekehrt. Bei dem Fass 12 kann es sich beispielsweise um ein Vakuumfass handeln.

Die relative Höhenverstellung des Saugeinlasses 20 kann darüber hinaus auch in Abhängigkeit von einem erfassten Güllestand der mittels des Schiebschilds 18 aufgestauten Gülle und/oder in Abhängigkeit von einem Abstand zwischen einer Oberfläche der mittels des Schiebeschilds 18 aufgestauten Gülle und dem Saugeinlass 20, genauer einer nicht näher bezeichneten in Richtung des Untergrunds ausgerichteten Öffnung des Saugeinlasses 20, automatisch verstellt werden. Die Sammelvorrichtung 14 kann dafür eine Messeinrichtung aufweisen, welche dazu ausgelegt ist, den Güllestand und/oder den Abstand zwischen der Oberfläche der Gülle und dem Saugeinlass 20 zu messen und entsprechende Messdaten an die Höhenverstelleinrichtung zu übertragen, welche daraufhin den Hydraulikzylinder 50 entsprechend ansteuert.

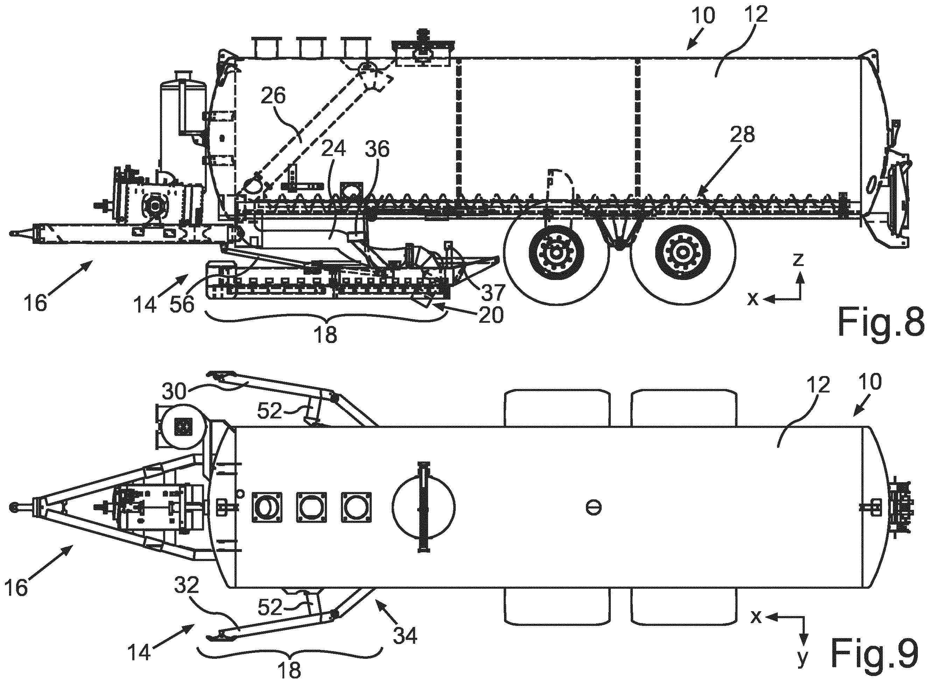

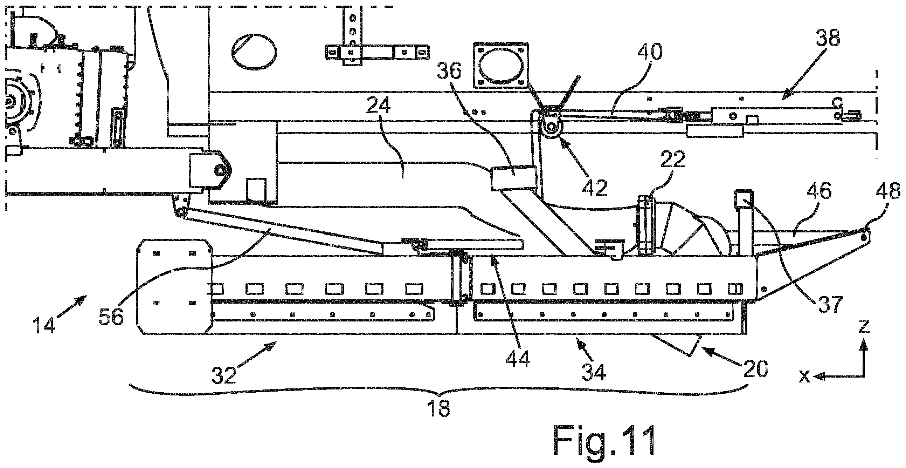

In den Figuren 8 bis 11 ist die am Fasswagen 10 angebrachte Sammelvorrichtung 14 wiederum in den gleichen Ansichten wie in den Figuren 1 bis 4 gezeigt, wobei das Schiebeschild 18 dabei in seiner abgesenkten und ausgebreiteten Arbeitsstellung angeordnet ist. In den Figuren 8 und 11 ist gut zu erkennen, dass die Stützelemente 36, 37 aufgrund der Absenkung des Schiebeschilds 18 relativ zum Fasswagen 10 nunmehr in Hochrichtung z von der nicht näher bezeichneten Unterseite des Fasswagens 10 beabstandet sind. Aufgrund des flexiblen Schlauchs 24 kann diese Relativbewegung des Schiebeschilds 18 zum Fasswagen 10 problemlos ausgeglichen werden.

Um eine Verschiebung des Schiebeschilds 18 relativ zum Fasswagen 10 in Fahrzeuglängsrichtung x zu begrenzen umfasst die Sammelvorrichtung 14 zumindest ein Zugmittel 56, welches am Schiebeschild 18 und im Bereich der Deichsel 16 am Fasswagen 10 befestigt ist. Vorzugsweise sind zwei der Zugmittel rechts und links vom Schlauch 24 im Bereich der Deichsel 16 und am Schiebeschild 18 befestigt. Nachdem das Schiebeschild 18 durch Ausfahren der Hydraulikzylinder 38 vollständig auf den Untergrund abgesenkt worden ist, wird bei einer Vorwärtsfahrt des Fasswagens 10 das Schiebeschild 18 vollständig oder zumindest hauptsächlich mittels der Zugmittel 56 gezogen.

Das Schiebeschild 18 ist also nur über die Zugmittel 38, welche zum Anheben und Absenken des Schiebeschilds 18 dienen, und über die Zugmittel 56, welche zum Ziehen des Schiebeschilds 18 mittels des Fasswagens 10 dienen, mit dem Fasswagen verbunden. Die Zugmittel 38, 56 sind dabei so lang gewählt und derart angeordnet, dass das Schiebeschild 18 in gewissen Grenzen nach links und rechts, also in Fahrzeugquerrichtung y, frei schwingend am Fasswagen 10 gehalten ist. Während der Fahrt mit dem Fasswagen 10 kann das Schiebeschild 18 daher nach links und rechts gegenüber dem Fasswagen ausscheren.

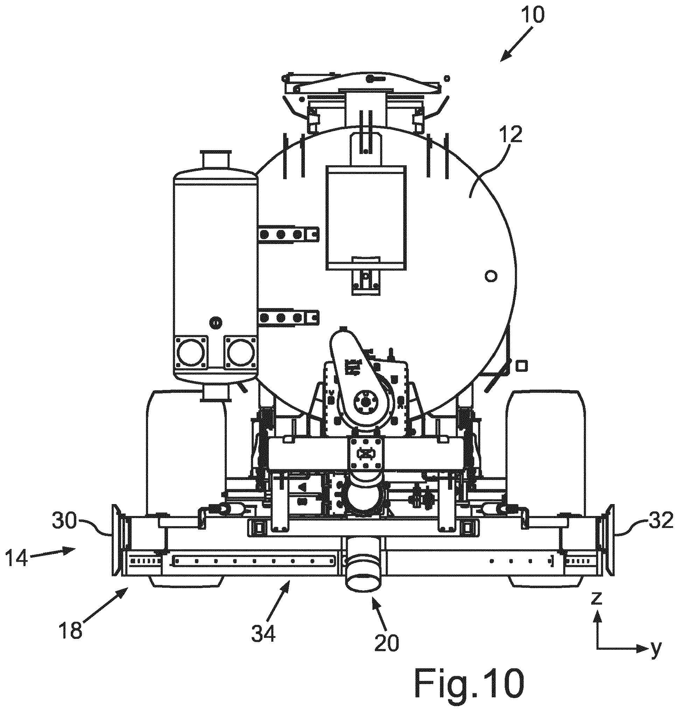

In den Figuren 9 und 10 ist die ausgebreitete Arbeitsstellung der Arme 30, 32 des Schiebeschilds 18 zu erkennen. Anhand dieser Darstellungen ist auch gut zu erkennen, dass in der ausgebreiteten Arbeitsstellung die beiden Arme 30, 32 den Fasswagen 10 in Querrichtung y überragen. Ferner ist beim Vergleich der beiden Ansichten in den Figuren 3 und 10 deutlich erkennbar, dass das Schiebeschild 18 gemäß Anordnung in Fig. 10 deutlich weiter in Richtung Untergrund abgesenkt ist als gemäß der Anordnung in Fig. 3.

Gemäß den Darstellungen in den Figuren 8, 10 und 11 ist der Saugeinlass 20 sogar so weit relativ zum Schiebeschild 18 abgesenkt worden, dass dieser mit seinem offenen Ende unterhalb vom Schiebeschild 18 angeordnet ist. Dies ist zwar grundsätzlich möglich aber üblicherweise nicht die normale Stellung des Saugeinlasses 20 gegenüber dem Schiebeschild 18.

Stattdessen ist es vorzugsweise vorgesehen, dass der Saugeinlass 20 derart relativ zum Schiebeschild 18 in Hochrichtung z verstellt ist bzw. wird, dass der Saugeinlass 20 den Untergrund nicht berührt, während das Schiebeschild 18 in seiner herabgelassenen Arbeitsstellung über den Untergrund 18 bewegt wird, um die aufzunehmende Gülle zu sammeln und aufzustauen.

### BEZUGSZEICHENLISTE:

- 10: Fasswagen
- 12: Güllefass
- 14: Sammelvorrichtung
- 16: Deichsel
- 18: Schiebeschild
- 20: Saugeinlass
- 22: Schnittstelle
- 24: Schlauch
- 26: Rohr
- 28: Schneckenförderer
- 30: rechter Arm
- 32: linker Arm
- 34: restlicher Teil des Schiebeschilds
- 36: Stützelement
- 37: Stützelement
- 38: Hydraulikzylinder
- 40: Zugmittel
- 42: Umlenkrolle
- 44: Hydraulikzylinder
- 46: Schwinge
- 48: Achse
- 50: Hydraulikzylinder
- 52: Fortsatz
- 54: Sensor
- 56: Zugmittel

## Patentansprüche

1. Sammelvorrichtung (14) für einen Fasswagen (10), umfassend
- ein sich entlang der Längsrichtung (x) der Sammelvorrichtung (14) verjüngendes Schiebeschild (18) zum Aufstauen von auf einem Untergrund angeordneter Gülle;
- einen Saugeinlass (20) zum Aufsaugen der mittels des Schiebeschilds (18) aufgestauten Gülle;
- eine Schnittstelle (22), mittels welcher der Saugeinlass (20) zumindest mittelbar mit einem Fass (12) des Fasswagens (10) verbindbar ist,
- wobei die Sammelvorrichtung (14) eine Höhenverstelleinrichtung umfasst, mittels welcher eine Höhenposition des Saugeinlasses (20) relativ zum Schiebeschild (18) verstellbar ist;
**dadurch gekennzeichnet, dass**
am Saugeinlass (20) eine Schwinge (46) befestigt ist, welche um eine in Querrichtung (y) der Sammelvorrichtung (14) verlaufende Achse (48) verschwenkbar am Schiebeschild (18) angeordnet ist, wobei die Höhenverstelleinrichtung einen Hydraulikzylinder (50) aufweist, mittels welchem die Schwinge (46) gegenüber dem Schiebeschild (18) um die Achse (48) verschwenkbar ist.

2. Sammelvorrichtung (14) nach Anspruch 1,
**dadurch gekennzeichnet, dass**
die Höhenverstelleinrichtung dazu ausgelegt ist, in Abhängigkeit von einem Unterdruck in dem als Vakuumfass ausgebildeten Fass (12) des Fasswagens (10) die Höhenposition des Saugeinlasses (20) relativ zum Schiebeschild (18) automatisch zu verstellen.

3. Sammelvorrichtung (14) nach Anspruch 2,
**dadurch gekennzeichnet, dass**
die Sammelvorrichtung (14) einen Sensor, insbesondere im Bereich der Schnittstelle, aufweist, welcher dazu ausgelegt ist, den Unterdruck im Vakuumfass (12) zu messen und entsprechende Messdaten an die Höhenverstelleinrichtung zu übertragen.

4. Sammelvorrichtung (14) nach einem der vorhergehenden Ansprüche,
**dadurch gekennzeichnet, dass**
die Höhenverstelleinrichtung dazu ausgelegt ist, in Abhängigkeit von einem Güllestand der mittels des Schiebschilds (18) aufgestauten Gülle und/oder in Abhängigkeit von einem Abstand zwischen einer Oberfläche der mittels des Schiebschilds (18) aufgestauten Gülle und dem Saugeinlass (20) die Höhenposition des Saugeinlasses relativ zum Schiebeschild automatisch zu verstellen.

5. Sammelvorrichtung (14) nach Anspruch 4,
**dadurch gekennzeichnet, dass**
die Sammelvorrichtung (14) eine Messeinrichtung aufweist, welche dazu ausgelegt ist, den Güllestand und/oder den Abstand zwischen der Oberfläche der Gülle und dem Saugeinlass (20) zu messen und entsprechende Messdaten an die Höhenverstelleinrichtung zu übertragen.

6. Sammelvorrichtung (14) nach einem der vorhergehenden Ansprüche,
**dadurch gekennzeichnet, dass**
das Schiebeschild (18) in der bestimmungsgemäßen Einbaulage der Sammelvorrichtung (14) zur Höhenverstellung des Schiebeschilds (18) zwischen einer abgesenkten Arbeitsstellung und einer angehobenen Transportstellung relativ zum Fasswagen (10) bewegbar ist.

7. Sammelvorrichtung (14) nach Anspruch 6,
**dadurch gekennzeichnet, dass**
die Sammelvorrichtung (14) zur Höhenverstellung des Schiebeschilds (18) wenigstens einen Hydraulikzylinder (38) und ein Zugmittel (40) umfasst, wobei in der bestimmungsgemäßen Einbaulage der Sammelvorrichtung (14) der Hydraulikzylinder (38) am Fasswagen (10) angeordnet und unter Vermittlung des Zugmittels (40) zumindest mittelbar mit dem Schiebeschild (18) verbunden ist.

8. Sammelvorrichtung (14) nach Anspruch 7,
**dadurch gekennzeichnet, dass**
in der bestimmungsgemäßen Einbaulage der Sammelvorrichtung (14) der Hydraulikzylinder (38) mit der Fahrzeuglängsrichtung (x) des Fasswagens (10) fluchtend angeordnet ist, wobei das Zugmittel (40) mittels einer am Fasswagen (10) angeordneten Umlenkrolle (42) der Sammelvorrichtung (14) um im Wesentlichen 90 Grad umgelenkt ist.

9. Sammelvorrichtung (14) nach einem der vorhergehenden Ansprüche,
**dadurch gekennzeichnet, dass**
in der bestimmungsgemäßen Einbaulage der Sammelvorrichtung (14) das Schiebeschild (18) in Fahrzeugquerrichtung (y) des Fasswagens einen Bewegungsfreiheitsgrad aufweist.

10. Sammelvorrichtung (14) nach einem der vorhergehenden Ansprüche,
**dadurch gekennzeichnet, dass**
die Sammelvorrichtung zumindest ein am Schiebeschild (18) befestigtes Zugmittel aufweist, welches am Fasswagen (10) befestigbar ist, um das Schiebeschild (18) mittels des Fasswagens zu ziehen.

11. Sammelvorrichtung (14) nach einem der vorhergehenden Ansprüche,
**dadurch gekennzeichnet, dass**
am Schiebeschild (18) zumindest ein Stützelement (36, 37) angeordnet ist, mittels welchem das Schiebeschild (18) in der angehobenen Transportstellung von unten am Fasswagen (10) abstützbar ist.

12. Sammelvorrichtung (14) nach einem der vorhergehenden Ansprüche,
**dadurch gekennzeichnet, dass**
das Schiebeschild (18) einen linken und einen rechten Arm (30, 32) aufweist, welche zur Breitenverstellung des Schiebeschilds (18) zwischen einer ausgebreiteten Arbeitsstellung und einer zusammengeklappten Transportstellung verschwenkbar an einem restlichen, insbesondere im Wesentlichen V-förmigen, Teil (34) des Schiebeschilds (18) gelagert sind.

13. Sammelvorrichtung (14) nach Anspruch 12,
**dadurch gekennzeichnet, dass**
die Sammelvorrichtung (14) zur Breitenverstellung des Schiebeschilds (18) jeweilige Hydraulikzylinder (44) aufweist, mittels welchen der linke Arm (32) und der rechte Arm (34) zumindest mittelbar mit dem restlichen Teil (18) des Schiebeschilds (18) verbunden sind.

14. Fasswagen (10) mit einer Sammelvorrichtung (14) nach einem der vorhergehenden Ansprüche.

## Claims

1. Collection device (14) for a tank truck (10), comprising
- a scraper (18) tapering along the longitudinal direction (x) of the collection device (14) for accumulating liquid manure on a substrate;
- a suction inlet (20) for sucking up the liquid manure accumulated by means of the scraper (18);
- an interface (22) by means of which the suction inlet (20) can be connected at least indirectly to a barrel (12) of the tank truck (10),
- wherein the collection device (14) comprises a height adjustment device by means of which a height position of the suction inlet (20) relative to the scraper (18) is adjustable;
**characterised in that**
a rocker (46) is fastened to the suction inlet (20), which rocker is arranged on the scraper (18) so as to be pivotable about an axis (48) extending in the transverse direction (y) of the collection device (14), wherein the height adjustment device comprises a hydraulic cylinder (50) by means of which the rocker (46) is pivotable about the axis (48) relative to the scraper (18).

2. Collection device (14) according to claim 1,
**characterised in that**
the height adjustment device is configured to automatically adjust the height position of the suction inlet (20) relative to the scraper (18) as a function of a reduced pressure in the barrel (12) of the tank truck (10), which barrel is configured as a vacuum barrel.

3. Collection device (14) according to claim 2,
**characterised in that**
the collection device (14) has a sensor, in particular in the region of the interface, which sensor is configured to measure the reduced pressure in the vacuum barrel (12) and to transmit corresponding measurement data to the height adjustment device.

4. Collection device (14) according to any one of the preceding claims,
**characterised in that**
the height adjustment device is configured to automatically adjust the height position of the suction inlet relative to the scraper as a function of a liquid manure level of the liquid manure accumulated by means of the scraper (18) and/or as a function of a distance between a surface of the liquid manure accumulated by means of the scraper (18) and the suction inlet (20).

5. Collection device (14) according to claim 4,
**characterised in that**
the collection device (14) comprises a measuring device which is designed to measure the liquid manure level and/or the distance between the surface of the liquid manure and the suction inlet (20) and to transmit corresponding measurement data to the height adjustment device.

6. Collection device (14) according to any one of the preceding claims,
**characterised in that**
in the intended installation position of the collection device (14) the scraper (18) is movable for height adjustment of the scraper (18) between a lowered working position and a raised transport position relative to the tank truck (10).

7. Collection device (14) according to claim 6,
**characterised in that**
for adjusting the height of the scraper (18) the collection device (14) comprises at least one hydraulic cylinder (38) and a traction means (40), wherein in the intended installation position of the collection device (14) the hydraulic cylinder (38) is arranged on the tank truck (10) and is connected at least indirectly to the scraper (18) by means of the traction means (40).

8. Collection device (14) according to claim 7,
**characterised in that**
in the intended installation position of the collection device (14), the hydraulic cylinder (38) is arranged in alignment with the vehicle longitudinal direction (x) of the tank truck (10), the traction means (40) being deflected by substantially 90 degrees by means of a deflection roller (42) of the collection device (14) arranged on the tank truck (10).

9. Collection device (14) according to any one of the preceding claims,
**characterised in that** in the intended installation position of the collection device (14), the scraper (18) has a degree of freedom of movement in the transverse vehicle direction (y) of the tank truck.

10. Collection device (14) according to any one of the preceding claims,
**characterised in that**
the collection device has at least one traction means which is attached to the scraper (18) and which can be attached to the tank truck (10) in order to pull the scraper (18) by means of the tank truck.

11. Collection device (14) according to any one of the preceding claims,
**characterised in that**
at least one support element (36, 37) is arranged on the scraper (18), by means of which the scraper (18) can be supported from below on the tank truck (10) in the raised transport position.

12. Collection device (14) according to any one of the preceding claims,
**characterised in that**
the scraper (18) has a left and a right arm (30, 32) for adjusting the width of the scraper (18) between an extended working position and a folded-up transport position, which arms are mounted pivotably on a remaining, in particular substantially V-shaped, part (34) of the scraper (18).

13. Collection device (14) according to claim 12,
**characterised in that**
for adjusting the width of the scraper (18) the collection device (14) has respective hydraulic cylinders (44), by means of which the left arm (32) and the right arm (34) are connected at least indirectly to the remaining part (18) of the scraper (18).

14. Tank truck (10) comprising a collection device (14) according to any one of the preceding claims.

## Revendications

1. Dispositif collecteur (14) pour un camion-citerne (10), comprenant
- une lame (18), se rétrécissant le long de la direction longitudinale (x) du dispositif collecteur (14), pour accumuler du lisier placé sur un sol ;
- une entrée d'aspiration (20) pour aspirer le lisier accumulé au moyen de la lame (18) ;
- une interface (22) au moyen de laquelle l'entrée d'aspiration (20) peut être reliée au moins indirectement à une citerne (12) du camion-citerne (10),
- lequel dispositif collecteur (14) comprend un dispositif de réglage en hauteur au moyen duquel une position en hauteur de l'entrée d'aspiration (20) est réglable par rapport à la lame (18) ;
**caractérisé en ce qu'**une bielle oscillante (46) est fixée à l'entrée d'aspiration (20), laquelle bielle oscillante est agencée sur la lame (18) de manière à pouvoir pivoter autour d'un axe (48) s'étendant dans la direction transversale (y) du dispositif collecteur (14),
dans lequel le dispositif de réglage en hauteur comporte un vérin hydraulique (50) au moyen duquel la bielle oscillante (46) peut pivoter autour de l'axe (48) par rapport à la lame (18).

2. Dispositif collecteur (14) selon la revendication 1, **caractérisé en ce que** le dispositif de réglage en hauteur est conçu pour régler automatiquement la position en hauteur de l'entrée d'aspiration (20) par rapport à la lame (18) en fonction d'une dépression dans la citerne (12), conçue comme une citerne sous vide, du camion-citerne (10).

3. Dispositif collecteur (14) selon la revendication 2, **caractérisé en ce que** le dispositif collecteur (14) comporte un capteur, en particulier dans la zone de l'interface, qui est conçu pour mesurer la dépression dans la citerne sous vide (12) et transmettre des données mesurées correspondantes au dispositif de réglage en hauteur.

4. Dispositif collecteur (14) selon l'une quelconque des revendications précédentes, **caractérisé en ce que** le dispositif de réglage en hauteur est conçu pour régler automatiquement la position en hauteur de l'entrée d'aspiration par rapport à la lame en fonction d'un niveau de lisier du lisier accumulé au moyen de la lame (18) et/ou en fonction d'une distance entre une surface du lisier accumulé au moyen de la lame (18) et l'entrée d'aspiration (20).

5. Dispositif collecteur (14) selon la revendication 4, **caractérisé en ce que** le dispositif collecteur (14) comporte un dispositif de mesure qui est conçu pour mesurer le niveau de lisier et/ou la distance entre la surface du lisier et l'entrée d'aspiration (20) et transmettre des données mesurées correspondantes au dispositif de réglage en hauteur.

6. Dispositif collecteur (14) selon l'une quelconque des revendications précédentes, **caractérisé en ce que**, dans la position normale de montage du dispositif collecteur (14), pour le réglage en hauteur de la lame (18), la lame (18) est déplaçable par rapport au camion-citerne (10) entre une position de travail abaissée et une position de transport relevée.

7. Dispositif collecteur (14) selon la revendication 6, **caractérisé en ce que** le dispositif collecteur (14) comprend pour le réglage en hauteur de la lame (18) au moins un vérin hydraulique (38) et un mécanisme de traction (40), lequel vérin hydraulique (38), dans la position normale de montage du dispositif collecteur (14), est agencé au niveau du camion-citerne (10) et est relié au moins indirectement à la lame (18) par l'intermédiaire du mécanisme de traction (40).

8. Dispositif collecteur (14) selon la revendication 7, **caractérisé en ce que**, dans la position normale de montage du dispositif collecteur (14), le vérin hydraulique (38) est agencé dans l'alignement de la direction longitudinale de véhicule (x) du camion-citerne (10), le mécanisme de traction (40) étant dévié d'environ 90 degrés au moyen d'un galet de renvoi (42), agencé au niveau du camion-citerne (10), du dispositif collecteur (14).

9. Dispositif collecteur (14) selon l'une quelconque des revendications précédentes, **caractérisé en ce que**, dans la position normale de montage du dispositif collecteur (14), la lame (18) présente un degré de liberté de mouvement dans la direction transversale de véhicule (y) du camion-citerne.

10. Dispositif collecteur (14) selon l'une quelconque des revendications précédentes, **caractérisé en ce que** le dispositif collecteur comporte au moins un mécanisme de traction qui est fixé à la lame (18) et qui peut être fixé au camion-citerne (10) pour tirer la lame (18) au moyen du camion-citerne.

11. Dispositif collecteur (14) selon l'une quelconque des revendications précédentes, **caractérisé en ce qu'**au moins un élément de soutien (36, 37) est agencé au niveau de la lame (18), élément de soutien au moyen duquel la lame (18) dans la position de transport relevée peut être soutenue d'en bas au niveau du camion-citerne (10).

12. Dispositif collecteur (14) selon l'une quelconque des revendications précédentes, **caractérisé en ce que** la lame (18) comporte un bras gauche et un bras droit (30, 32) qui sont montés au niveau d'une partie restante (34), en particulier globalement en forme de V, de la lame (18) de manière à pouvoir pivoter pour le réglage en largeur de la lame (18) entre une position de travail déployée et une position de transport repliée.

13. Dispositif collecteur (14) selon la revendication 12, **caractérisé en ce que** le dispositif collecteur (14) comporte pour le réglage en largeur de la lame (18) des vérins hydrauliques (44) respectifs au moyen desquels le bras gauche (32) et le bras droit (34) sont reliés au moins indirectement à la partie restante (18) de la lame (18).

14. Camion-citerne (10) avec un dispositif collecteur (14) selon l'une quelconque des revendications précédentes.
